# EUROPÄISCHE PATENTSCHRIFT

(11) **EP 1 760 343 B1**
(45) Veröffentlichungstag und Bekanntmachung des Hinweises auf die Patenterteilung: **09.11.2011**
(21) Anmeldenummer: 05019051.1
(22) Anmeldetag: 01.09.2005
(51) Int. Cl.: F16C 33/10, F16J 15/00

(54) **Dichtungseinrichtung**
Sealing device
Dispositif d'étanchéité

(43) Veröffentlichungstag der Anmeldung: 07.03.2007
(73) Patentinhaber: Carl Freudenberg KG, 69469 Weinheim (DE)
(72) Erfinder: Röhner, Gerhard, 69502 Hemsbach (DE)

(56) Entgegenhaltungen:
- WO-A-2005/078457
- US-A- 5 509 667
- US-A- 5 823 541
- US-A1- 2004 075 218

## Beschreibung

### Technisches Gebiet

Die Erfindung betrifft eine Anordnung nach dem Oberbegriff des Patentanspruchs 1.

### Stand der Technik

Derartige Anordnungen und Dichtungseinrichtungen sind aus dem Stand der Technik bereits bekannt. Gattungsbildende Anordnungen und Dichtungseinrichtungen definieren Bereiche, welche ein Fluid aufnehmen, das als Schmiermittel dient. Dabei muss dafür Sorge getragen werden, dass die Bereiche hinreichend dicht ausgestaltet sind, damit das Schmiermittel nicht austritt. Üblicherweise fungieren als Schmiermittel Fette oder Öle, welche beim Einsatz der gattungsbildenden Lager verschmutzt werden können.

Bei den gattungsbildenden Anordnungen und Dichtungseinrichtungen ist daher in aufwändiger Weise dafür Sorge zu tragen, dass weder Staubpartikel noch andere Verschmutzungen in das Fluid eindringen. Die Ausbildung dieser Vorkehrungen ist jedoch kostspielig und fehleranfällig.

Aus der US 5,823,541 ist eine Anordnung bekannt, bei der ein Sensor in der Wandung eines Gehäuses positioniert ist. Aus der US 5,509,667 A ist eine Dichtungsanordnung in Form eines Radialwellendichtrings bekannt. Die US 2004/0075218 A1 zeigt eine Anordnung mit einem optischen Sensor, der als Barcode-Lesegerät einsetzbar ist. Die WO 2005/078457 A1 zeigt eine Anordnung mit einem Sensor, der über spezielle Halterungen befestigt ist.

Insoweit weisen die gattungsbildenden Anordnungen in Dichtungseinrichtungen im Hinblick auf eine betriebstaugliche Ausgestaltung erhebliche Nachteile auf.

### Darstellung der Erfindung

Der Erfindung liegt daher die Aufgabe zugrunde, ein Dichtungssystem zu schaffen, welches bei konstruktiv einfacher Ausgestaltung eine hohe Betriebstauglichkeit gewährleistet.

Die vorliegende Erfindung löst die zuvor genannte Aufgabe durch die Merkmale des Patentanspruchs 1.

Erfindungsgemäß ist zunächst erkannt worden, dass die gattungsbildenden Anordnungen in konstruktiver Hinsicht wenig gebrauchstauglich ausgebildet sind. In einem nächsten Schritt ist erkannt worden, dass dies damit zusammenhängt, dass das Fluid nur in wenig zufrieden stellender Weise vor Umwelteinflüssen geschützt werden kann. In einem dritten Schritt ist sodann erkannt worden, dass die Nachteile des Standes der Technik dadurch überkommen werden können, indem die Dichtungseinrichtung einstückig ausgebildet wird. Durch die einstückige Ausgestaltung wird auf Bauteile verzichtet, die zu Schwachstellen des Systems führen können, welche einen Eintritt von Verschmutzungen erlauben. Die einstückige Ausgestaltung erlaubt die Ausbildung der relevanten Bereiche direkt in der Dichtungseinrichtung. Dies erlaubt zum einen eine problemlose Fertigung der Dichtungseinrichtung und zum anderen einen integralen und homogenen Aufbau der Dichtungseinrichtung. Durch die erfindungsgemäße Ausgestaltung ist sichergestellt, dass ein Dichtungssystem geschaffen werden kann, welches bei konstruktiv einfachem Aufbau eine hohe Betriebstauglichkeit gewährleistet.

Das Lager der Anordnung ist als Kugellager mit zwei Lagerschalen ausgestaltet. Kugellager erlauben eine weitgehend verschleißfreie und stabile Lagerung bewegter Körper. Die Dichtungseinrichtung kann auf Grund ihrer einstückigen Ausgestaltung die Kugel im Inneren des Lagers vor Verschmutzungen schützen.

Die Dichtungseinrichtung begrenzt zusammen mit den Lagerschalen die Bereiche und bildet Kammern aus. Ganz konkret sind die Bereiche in der Dichtungseinrichtung als Aussparungen oder Ausnehmungen ausgestaltet, die durch die Wandung des Lagers zu einem Raum ergänzt werden, in dem ein Schmiermittel aufgenommen wird. Diese konkrete Ausgestaltung erlaubt es, eine schadhaft gewordene Dichtungseinrichtung auf einfache Weise zu entfernen und durch eine neue zu ersetzen. Dabei ist besonders vorteilhaft, dass die das Schmiermittel enthaltenden Kammern nicht dem Lager selbst, sondern der Dichtungseinrichtung zugeordnet sind. Insoweit ist auch das Schmiermittel leicht austauschbar.

Der Dichtungseinrichtung ist ein Sensor zur Erfassung des Fluids zugeordnet. Diese Ausgestaltung erlaubt eine Überwachung eines Dichtungssystems auf dessen Betriebszustand. Der Sensor könnte hierbei kapazitiv, optisch oder induktiv arbeiten. Durch den Sensor kann festgestellt werden, ob im jeweils überwachten Bereich bzw. der überwachten Kammer eine ausreichende Menge an Fluid vorhanden ist, um eine ausreichende Schmierung zu gewährleisten.

Der Sensor ist dem zweiten Bereich zugeordnet. Der zweite Bereich fungiert vor diesem Hintergrund als Bypassbereich, welcher nur dann Fluid aufnimmt, wenn die Dichtungsfunktion der Dichtungseinrichtung nicht mehr einwandfrei gewährleistet ist. Insoweit ist der zweite Bereich als Kontrollbereich ausgestaltet.

Folglich ist die eingangs genannte Aufgabe gelöst.

Die Dichtungseinrichtung könnte als Dichtungsprofil ausgebildet sein. Vor diesem Hintergrund ist denkbar, dass die Dichtungseinrichtung als Strang ausgebildet ist, welcher in besonders einfacher Weise herstellbar ist. Denkbar ist beispielsweise, dass die Dichtungseinrichtung durch Extrusionsverfahren oder durch Strangpressen hergestellt werden kann. Die Ausgestaltung als Dichtungsprofil erlaubt es, die Dichtungseinrichtung mit Ausstülpungen oder Ausnehmungen zu versehen, die komplementär zu den Strukturen des Lagers ausgebildet sind, in welches die Dichtungseinrichtung eingefügt werden soll. Die komplementäre Ausgestaltung erlaubt einen formschlüssigen Verbund der Dichtungseinrichtung mit dem Lager. Dabei ist denkbar, dass das Dichtungsprofil aus einem elastomeren Werkstoff gefertigt ist. Durch diese Materialauswahl kann sich das Dichtungsprofil an geringe Unebenheiten problemlos dichtend anlegen.

Die Dichtungseinrichtung könnten als toroidaler Körper ausgestaltet sein. Die Ausgestaltung als toroidaler Körper erlaubt die Verwendung als Dichtungseinrichtung in runden Flanschen. Die Dichtungseinrichtung könnte auch ringförmig ausgestaltet sein. Die Dichtungseinrichtung kann bei diesen Ausgestaltungen einen runden Flansch umfänglich abdichten. Dabei ist denkbar, dass die Dichtungseinrichtung einen Durchmesser von wenigen Zentimetern bis zu mehreren Metern aufweisen kann. Wenn die Dichtungseinrichtung einen Durchmesser von mehreren Metern aufweist, ist diese in Großlagern einsetzbar. Vor diesem Hintergrund ist denkbar, dass die Dichtungseinrichtung in Windkraftanlagen Verwendung findet. Diese Verwendung ist vorteilhaft, da Windkraftanlagen in besonderem Maße vor Staub in der Luft geschützt werden müssen. Durch Stürme und Winde, denen eine Windkraftanlage ständig ausgesetzt ist, können die Schmiermittel in deren Lagern sehr leicht verschmutzen.

Der zweite Bereich könnte als Durchgang ausgebildet sein, in den der Sensor einfügbar ist. Diese konkrete Ausgestaltung erlaubt ein Einstecken oder Einrasten eines Sensors in die Dichtungseinrichtung. Dies erlaubt ein problemloses Austauschen eines schadhaften Sensors. Des Weiteren erlaubt die Ausgestaltung des zweiten Bereichs als Durchgang dessen problemlose Reinigung, da er nach Entfernen des Sensors in einfacher Weise ausgespült werden kann.

Der Sensor könnte als Leckagesensor fungieren. Bei dieser Ausgestaltung könnte der Leckagesensor mit einer elektronischen Einrichtung verbunden sein, welche das Maß der Leckage ermitteln kann. Insoweit ist nicht nur eine digitale Angabe darüber realisierbar, ob das Fluid in den zweiten Bereich eindringt. Vielmehr ist durch diese konkrete Augestaltung eine kontinuierliche Angabe darüber möglich, wie viel Schmiermittel in den zweiten Bereich eindringt. Der Sensor könnte hierbei optisch, kapazitiv oder induktiv arbeiten. Die Ausgestaltung des Sensors als optisches Instrument ist bei Verwendung einer einstückig ausgebildeten Dichtungseinrichtung besonders gut möglich, da das Schmiermittel vor Verunreinigungen geschützt wird, welche die optischen Eigenschaften des Schmiermittels beeinflussen und die Messwerte verfälschen können.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche, andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele anhand der Zeichnung werden auch im Allgemeinen bevorzugte Ausgestaltungen und Weiterbildungen der Lehre erläutert.

### Kurzbeschreibung der Zeichnung

In der Zeichnung zeigen
- Fig. 1: eine Dichtungsanordnung in einer Schnittansicht und
- Fig. 2: eine schematische Ansicht einer Anordnung, welche in einer Windkraftanlage Verwendung findet.

### Ausführung der Erfindung

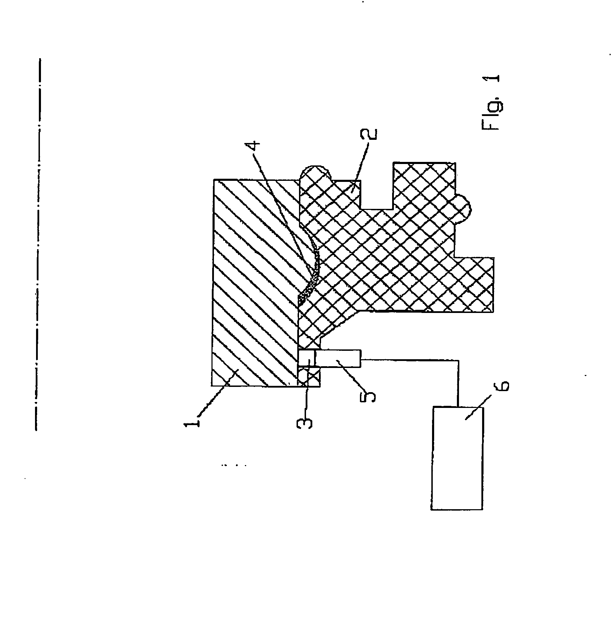

Fig. 1 zeigt eine Anordnung mit einem Lager 1, wobei dem Lager 1 eine Dichtungseinrichtung 2 zugeordnet ist. Die Dichtungseinrichtung 2 umfasst einen ersten Bereich 4 und einen zweiten Bereich 3 zur Aufnahme eines Fluids. Die Bereiche 3, 4 sind strömungsverbindbar. Die Dichtungseinrichtung 2 ist einstückig ausgebildet.

Die Dichtungseinrichtung 2 ist als Dichtungsprofil ausgestaltet, welches als koroidaler Körper ausgebildet ist. Der erste Bereich 4 ist als Kuhle ausgestaltet, in welche eine Ausstülpung einer Lagerschale des Lagers 1 hineinragt. Durch die Ausstülpung der Lagerschale und die Kuhle der Dichtungseinrichtung 2 wird eine sichelförmige Kammer gebildet, welche das Fluid aufnimmt. Insoweit bildet die Dichtungseinrichtung 2 zusammen mit einer Lagerschale die Bereiche 3, 4.

Der Dichtungseinrichtung 2 ist ein Sensor 5 zur Erfassung eines Fluids zugeordnet. Der Sensor 5 ist dem zweiten Bereich 3 zugeordnet, welcher als Durchgang in der Dichtungsanordnung 2 ausgestaltet ist. Der Sensor 5 ist in diesen Durchgang einfügbar. Mit dem Sensor 5 ist eine Auswerteelektronik 6 verbunden. Der Sensor 5 fungiert als Leckagesensor.

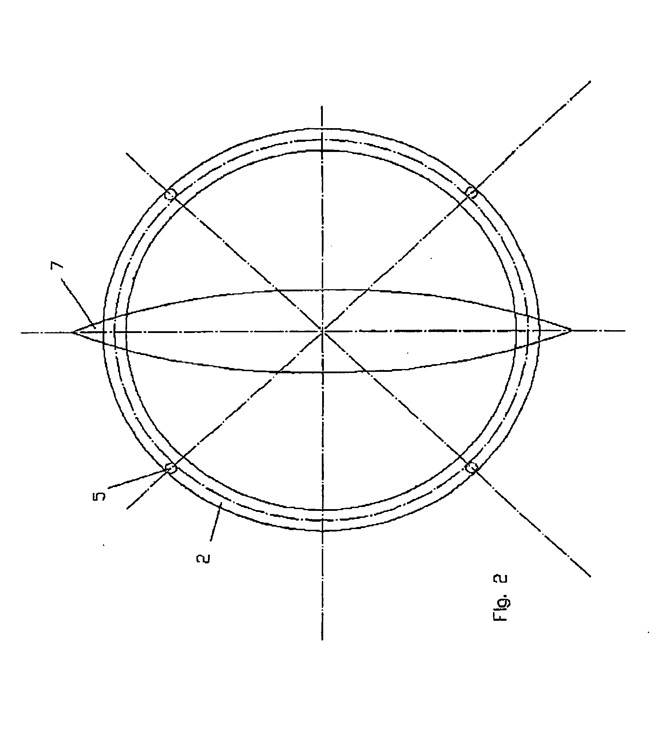

Fig. 2 zeigt in einer schematischen Ansicht eine Dichtungsanordnung 2, welcher vier Leckagesensoren 5 zugeordnet sind, die in einem Winkelabstand von jeweils 90° in der Dichtungseinrichtung 2 positioniert sind. Die Dichtungseinrichtung 2 ist Teil einer Anordnung in einer Windkraftanlage. Die Windkraftanlage umfasst einen Rotor 7, der durch ein Kugellager gelagert ist.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen.

Abschließend sei ganz besonders hervorgehoben, dass die zuvor rein willkürlich ausgewählten Ausführungsbeispiele lediglich zur Erörterung der erfindungsgemäßen Lehre dienen, diese jedoch nicht auf diese Ausführungsbeispiele einschränken.

## Patentansprüche

1. Anordnung, umfassend ein Lager (1), wobei dem Lager (1) mindestens eine Dichtungseinrichtung (2) zugeordnet ist, welche mindestens einen ersten Bereich (4) und mindestens einen zweiten Bereich (3) zur Aufnahme eines Fluids umfasst, wobei die Bereiche (3, 4) strömungsverbindbar sind, wobei die Dichtungseinrichtung (2) einstückig ausgebildet ist und wobei der Dichtungseinrichtung (2) ein Sensor (5) zur Erfassung des Fluids zugeordnet ist, **dadurch gekennzeichnet, dass** das Lager (1) als Kugellager mit zwei Lagerschalen ausgestaltet ist, wobei die Dichtungseinrichtung (2) zusammen mit den Lagerschalen die Bereiche (3, 4) begrenzt und Kammern ausbildet, wobei die Bereiche (3, 4) als Aussparungen oder Ausnehmungen in der Dichtungseinrichtung (2) ausgebildet sind, und wobei der Sensor (5) dem zweiten Bereich (3) zugeordnet ist.

2. Anordnung nach Anspruch 1, **dadurch gekennzeichnet, dass** die Dichtungseinrichtung (2) als Dichtungsprofil ausgestaltet ist.

3. Anordnung nach Anspruch 1 oder 2, **dadurch gekennzeichnet, dass** die Dichtungseinrichtung (2) als toroidaler Körper ausgestaltet ist.

4. Anordnung nach einem der Ansprüche 1 bis 3, **dadurch gekennzeichnet, dass** der zweite Bereich als Durchgang ausgestaltet ist, in den der Sensor (5) einfügbar ist.

5. Anordnung nach einem der Ansprüche 1 bis 4, **dadurch gekennzeichnet, dass** der Sensor (5) als Leckagesensor fungiert.

## Claims

1. Arrangement comprising a bearing (1), wherein the bearing (1) is assigned at least one sealing device (2) which comprises at least a first region (4) and at least a second region (3) for receiving a fluid, wherein the regions (3, 4) are flow-connectable, wherein the sealing device (2) is designed in one piece and wherein the sealing device (2) is assigned a sensor (5) for detecting the fluid, **characterized in that** the bearing (1) is designed as a ball bearing with two bearing shells, wherein the sealing device (2) together with the bearing shells delimits the regions (3, 4) and forms chambers, wherein the regions (3, 4) are designed as cutouts or recesses in the sealing device (2), and wherein the sensor (5) is assigned to the second region (3) .

2. Arrangement according to Claim 1, **characterized in that** the sealing device (2) is designed as a sealing profile.

3. Arrangement according to Claim 1 or 2, **characterized in that** the sealing device (2) is designed as a toroidal body.

4. Arrangement according to one of Claims 1 to 3, **characterized in that** the second region is designed as a passage into which the sensor (5) can be inserted.

5. Arrangement according to one of Claims 1 to 4, **characterized in that** the sensor (5) functions as a leakage sensor.

## Revendications

1. Agencement comprenant un palier (1), au moins un dispositif d'étanchéité (2) étant associé au palier (1) et comprenant au moins une première région (4) et au moins une deuxième région (3) pour recevoir un fluide, les régions (3, 4) pouvant être connectées fluidiquement, le dispositif d'étanchéité (2) étant réalisé d'une seule pièce et un capteur (5) pour détecter le fluide étant associé au dispositif d'étanchéité (2), **caractérisé en ce que** le palier (1) est réalisé sous forme de roulement à billes avec deux coques de palier, le dispositif d'étanchéité (2), conjointement avec les coques de palier, limitant les régions (3, 4) et constituant des chambres, les régions (3, 4) étant réalisées sous forme d'évidements ou de logements dans le dispositif d'étanchéité (2), et le capteur (5) étant associé à la deuxième région (3).

2. Agencement selon la revendication 1, **caractérisé en ce que** le dispositif d'étanchéité (2) est réalisé sous forme de profilé d'étanchéité.

3. Agencement selon la revendication 1 ou 2, **caractérisé en ce que** le dispositif d'étanchéité (2) est réalisé sous forme de corps toroïdal.

4. Agencement selon l'une quelconque des revendications 1 à 3, **caractérisé en ce que** la deuxième région est réalisée sous forme de passage dans lequel peut être introduit le capteur (5).

5. Agencement selon l'une quelconque des revendications 1 à 4, **caractérisé en ce que** le capteur (5) sert de capteur de fuite.
